# EUROPÄISCHE PATENTANMELDUNG

(11) **EP 4 530 862 A1**
(43) Veröffentlichungstag der Anmeldung: **02.04.2025**
(21) Anmeldenummer: 23200609.8
(22) Anmeldetag: 28.09.2023
(51) Int. Cl.: G06F 11/36, G06N 20/00

(54) **AUTOMATISIERTE ERZEUGUNG VON TESTCODE ZUM TESTEN VON EMBEDDED SOFTWARE**

(71) Anmelder: Robert Bosch GmbH, 70442 Stuttgart (DE)
(72) Erfinder: Schlund, Maximilian, 71034 Boeblingen (DE); Quante, Jochen, 71640 Ludwigsburg (DE); Woehrle, Matthias, 74321 Bietigheim-Bissingen (DE); Hecking-Harbusch, Jesko, 71229 Leonberg (DE); Sierra Loaiza, Sebastian Ernesto, 04107 Leipzig (DE)

(57) **Zusammenfassung**

Offenbart wird ein computer-implementiertes Verfahren für die automatisierte Erzeugung von Testcode zum Testen einer Software, umfassend Erzeugen, via ein Maschinenlernmodell, mindestens eines Testfalls und/oder eines Testcode zumindest basierend auf einem Code der Software und einem Prompt; und Bewerten des mindestens einen Testfalls und/oder des Testcode, wobei ein Bewertungsergebnis resultiert. Offenbart wird ein computer-implementiertes Verfahren zum weiteren Trainieren eines Maschinenlernmodells und/oder weiteren Maschinenlernmodells, wobei das Maschinenlernmodell dafür ausgelegt ist, mindestens einen Testfall und/oder einen Testcode zum Testen einer Software zumindest basierend auf einem Code der Software und einem Prompt zu erzeugen, und das weitere Maschinenlernmodell dafür ausgelegt ist, einen Testcode zum Testen der Software zumindest basierend auf mindestens einen Testfall und einem weiteren Prompt zu erzeugen); das Verfahren umfassend Anpassen des Maschinenlernmodells und/oder weiteren Maschinenlernmodells zumindest basierend auf mindestens einem Testfall und/oder des Testcode sowie auf mindestens einem Bewertungsergebnis, wobei das mindestens eine Bewertungsergebnis durch Bewerten des mindestens einen Testfalls und/oder des Testcode resultiert.

## Beschreibung

### Stand der Technik

Embedded Software zum Steuern, Regeln und/oder Überwachen technischer Systeme, insbesondere cyber-physischer Systeme wie z.B. Recheneinheiten eines Fahrzeugs und/oder eines Roboters, weist üblicherweise einen hohen Komplexitätsgrad auf. Aufgrund dessen ist es für einzelne Software-Ingenieure und selbst für ganze Software-Entwicklungsabteilungen herausfordernd, den Überblick über die Software und ihre Änderungen, insbesondere in ihrem gesamten Lebenszyklus (Entwicklung, Test, Produktion und Wartung) zu behalten. Software kann fehleranfällig sein und muss daher eingehend und über den Lebenszyklus der Software getestet werden. Besonders problematisch sind vor allem Fehler oder Schwachstellen, die - abgesehen von der Funktionalität der Software - die Sicherheit der Software, mithin des von ihr gesteuerten, geregelten und/oder überwachten technischen Systems, beeinträchtigen oder gar gefährden. Das Testen von Software wird daher häufig in einen formalisierten Validierungs- und Verifizierungsprozess (V & V) eingebunden.

Software kann zum Beispiel durch statische und/oder dynamische Software-Tests auf Fehler geprüft werden, wobei bei statischen Software-Tests im Gegensatz zu dynamischen Software-Tests die Software nicht ausgeführt wird. Zum Testen der Software können Testfälle und/oder Testcode definiert werden. Die Erstellung von Testfällen und/oder Testcode ist trotz Unterstützung einiger Tools bisher eine überwiegend manuelle Arbeit. Testfälle können zum Beispiel die Eingaben an und erwartete Ausgaben von einer Funktion der Software definieren. Ein Testcode kann die Testfälle implementieren und macht sie somit ausführbar. Die Tools zielen in der Regel auf die Erfüllung einer bestimmten Testabdeckung ab (z.B. Anweisungsabdeckung, Pfadabdeckung, etc.), d.h. dass bestimmte Teile des Code der Software zur Ausführung kommen. Allerdings arbeiten diese Tools bisher rein auf der Syntax des zu testenden Code, ohne die eigentlich zugrundeliegenden Anforderungen (d.h. die Spezifikation der Software) zu kennen. Dadurch erstellen sie systematisch immer die gleiche Menge von Testfällen und/oder Testcode. Durch den erzeugten Testcode kann der zu testende Code ausgeführt werden, jedoch ist die Korrektheit der Ausführung in der Regel durch manuell zu ergänzende Prüfungen (asserts) sicherzustellen. Im Hinblick auf die Komplexität der Software wäre zudem ein höherer Automatisierungsgrad wünschenswert.

Der Offenbarung liegt daher das Problem zugrunde, automatisiert aber dennoch verlässlich bessere Testfälle und/oder Testcode zum Testen der Software bereitzustellen.

### Offenbarung der Erfindung

Ein erster allgemeiner Aspekt der vorliegenden Offenbarung betrifft ein computer-implementiertes Verfahren für die automatisierte Erzeugung von Testcode zum Testen einer Software. Das Verfahren umfasst Erzeugen, via ein Maschinenlernmodell, mindestens eines Testfalls und/oder eines Testcode zumindest basierend auf einem Code der Software und einem Prompt. Das Verfahren umfasst weiterhin Bewerten des mindestens einen Testfalls und/oder des Testcode, wobei ein Bewertungsergebnis resultiert.

Die Software kann dafür ausgelegt sein, ein technisches System, insbesondere ein cyber-physisches System, insbesondere mindestens eine Recheneinheit eines Fahrzeugs, zu steuern, zu regeln und/oder zu überwachen. Insbesondere kann die Software eine embedded Software sein. Das Verfahren kann in einer elektronischen Programmierumgebung ausgeführt werden. Das Verfahren kann Ausführen des Testcode, gegebenenfalls in Abhängigkeit von dem Bewertungsergebnis, umfassen, wobei die Software getestet wird.

Ein zweiter allgemeiner Aspekt der vorliegenden Offenbarung betrifft ein computer-implementiertes Verfahren zum weiteren Trainieren eines Maschinenlernmodells und/oder weiteren Maschinenlernmodells, wobei das Maschinenlernmodell dafür ausgelegt ist, mindestens einen Testfall und/oder einen Testcode zum Testen einer Software zumindest basierend auf einem Code der Software und einem Prompt zu erzeugen, und das weitere Maschinenlernmodell dafür ausgelegt ist, einen Testcode zum Testen der Software zumindest basierend auf mindestens einen Testfall und einem weiteren Prompt zu erzeugen, wobei das Verfahren Anpassen des Maschinenlernmodells und/oder weiteren Maschinenlernmodells zumindest basierend auf mindestens einem Testfall und/oder des Testcode sowie auf mindestens einem Bewertungsergebnis umfasst, wobei das mindestens eine Bewertungsergebnis durch Bewerten des mindestens einen Testfalls und/oder des Testcode resultiert. Das Verfahren nach dem zweiten allgemeinen Aspekt (oder einer Ausführungsform) kann, muss aber nicht nach dem Verfahren nach dem ersten allgemeinen Aspekt (oder einer Ausführungsform davon) ausgeführt werden.

Ein dritter allgemeiner Aspekt der vorliegenden Offenbarung betrifft ein Computer-System, das dafür ausgelegt ist, das computer-implementierte Verfahren für die automatisierte Erzeugung von Testcode zum Testen einer Software nach dem ersten allgemeinen Aspekt (oder einer Ausführungsform davon) und/oder das computer-implementierte Verfahren zum weiteren Trainieren eines Maschinenlernmodells und/oder weiteren Maschinenlernmodells nach dem zweiten allgemeinen Aspekt (oder einer Ausführungsform davon) auszuführen.

Ein vierter allgemeiner Aspekt der vorliegenden Offenbarung betrifft ein Computer-Programm, das dafür ausgelegt ist, das computer-implementierte Verfahren für die automatisierte Erzeugung von Testcode zum Testen einer Software nach dem ersten allgemeinen Aspekt (oder einer Ausführungsform davon) und/oder das computer-implementierte Verfahren zum weiteren Trainieren eines Maschinenlernmodells und/oder weiteren Maschinenlernmodells nach dem zweiten allgemeinen Aspekt (oder einer Ausführungsform davon) auszuführen.

Ein fünfter allgemeiner Aspekt der vorliegenden Offenbarung betrifft ein computer-lesbares Medium oder Signal, das das Computer-Programm nach dem vierten allgemeinen Aspekt (oder einer Ausführungsform davon) speichert und/oder enthält.

Das in dieser Offenbarung vorgeschlagene Verfahren nach dem ersten Aspekt (oder einer Ausführungsform davon) ist auf die automatisierte Erzeugung von Testcode zum Testen der Software gerichtet. Der hohe Grad der Automatisierung ermöglicht das Testen der Software auf Basis einer (großen) Vielzahl von Testfällen und/oder Testcode. Durch das hier vorgeschlagene Verfahren können aussagekräftige oder zumindest im Vergleich zu den Ergebnissen herkömmlicher Tools aussagekräftigere Testfälle und/oder aussagekräftigerer Testcode erzeugt werden. Dies wird zum einen durch das Maschinenlernmodell mit einem hinreichend großen Maschinensprachverständnis und zum anderen durch das automatisierte Bewerten der Testfälle und/oder des Testcode nach etablierten V & V Methoden erreicht. Dadurch kann eine maschinelle Kreativität des Maschinenlernmodells genutzt werden, zugleich aber die Qualität der Testfälle und/oder des Testcode gesichert werden. In anderen Worten: Fehler, insbesondere fehlerhafte Testfälle und/oder fehlerhafter Testcode, die gelegentlich durchaus durch das Maschinenlernmodell entstehen können, werden verlässlich oder zumindest mit hinreichend großer Wahrscheinlichkeit durch die V & V Methoden erkannt, bevor sie zum Testen der Software eingesetzt werden. Dadurch werden nur fehlerfreie Testfälle und/oder fehlerfreier Testcode zum Testen der Software eingesetzt. Dadurch können die Funktionalität und die Sicherheit der Software und zum Beispiel des durch die Software gesteuerten, geregelten und/oder überwachten technischen Systems wie z.B. eines Fahrzeugs oder eines Roboters verbessert werden. Durch den hohen Grad der Automatisierung ist es außerdem möglich, sehr viel mehr Testfälle beim Testen der Software zu untersuchen. Auch dadurch kann die Software, mithin das technische System verbessert werden.

Vorteilhaft erweist sich, dass im Gegensatz zu herkömmlichen Methoden nicht nur die Syntax, sondern auch alle anderen verfügbaren Informationen aus dem Code der Software (wie z.B. natürlichsprachliche Kommentare) für die Testfallerzeugung ausgenutzt werden kann, was zu Testfällen führt, die sinnvoller sind als systematisch erzeugte Testfälle. Es können vorteilhafterweise auch weitere Metainformationen (z.B. Anforderungen aus einer natürlichsprachlichen und/oder formalen Spezifikation) in das Erzeugen der Testfälle und/oder des Testcode einbezogen werden.

Insbesondere durch die Variabilität (z.B. durch eine Zufallsauswahl) in der Ausgabe des Maschinenlernmodells (was im Fachjargon als Temperatur bezeichnet werden kann) können viele unterschiedliche Testfälle/-codes erzeugt werden, was zu einer höheren Testabdeckung (z.B. im Sinne von Szenarien) führen kann - über die per klassische Testabdeckungsmaßen bewertbare Testabdeckung hinaus. Zum Beispiel kann es so eher zu einem wiederholten Triggern eines Reglers kommen, um z.B. in den Anschlag zu kommen. Durch die große Menge an Trainingsdaten, die dem (trainierten) Maschinenlernmodell zugrunde liegt, geht eine sehr große Erfahrung, wie Testfälle für den jeweiligen Fall aussehen sollten, in die Erzeugung ein. Somit ist die Erzeugung besser an den jeweiligen Kontext angepasst als mit bisherigen (algorithmischen) Methoden, die den Kontext nur sehr eingeschränkt nutzen können, da alle Fälle explizit berücksichtigt werden müssten. Durch Prüfung der erzeugten Testfälle und/oder des erzeugten Testcode mit formalen Methoden wird sichergestellt, dass die Testfälle und/oder der Testcode korrekt sind und vorbestimmten Qualitätskriterien entsprechen. Insbesondere können dadurch auch Fehler z.B. in der Prüfung der Ergebnisse (im Testcode) erkannt und korrigiert werden.

Das vorgeschlagene Verfahren kann auch verwendet werden, um eine bereits vorhandene Menge von Testfällen und/oder vorhandenen Testcode um weitere Testfälle zu ergänzen, die z.B. einen anderen Zweck erfüllen und/oder andere Aspekte abdecken sollen. Zudem können vorhandene Testfälle und/oder Testcode, die nicht hinreichend gut bewertet worden sind, in weiteren Iterationen des Verfahrens angepasst, verbessert und/oder korrigiert werden. Insoweit kann es auch vorteilhaft sein, zunächst nur Testfälle zu generieren und zu bewerten und erst im Anschluss zum Beispiel in einer weiteren Iteration des Verfahrens den oder die Testcodes zu generieren.

Das Verfahren kann nicht nur den Funktionsaufruf mit entsprechenden Parametern erzeugen, sondern kann auch Testcode zum Prüfen des Ergebnisses (der im nächsten Schritt evtl. korrigiert wird) erzeugen.

Das Verfahren ist für alle verbreiteten Programmiersprachen gleichermaßen anwendbar und muss nicht - wie bisher - an eine bestimmte Programmiersprache aufwendig angepasst bzw. neu entwickelt werden.

Die Testfälle und/oder der Testcode können insbesondere auch für automatisiert übersetzten Code (z.B. von C nach Rust) generiert werden. Dadurch kann dann die Übersetzung des Code validiert und/oder verifiziert werden.

Ein weiterer Vorteil besteht darin, dass die resultierenden Testfälle und/oder Testcodes dazu genutzt werden können, einen domänen-spezifischen Testcodegenerator zu trainieren. Dies kann zum Beispiel wie im Verfahren 200 nach dem zweiten allgemeinen Aspekt (oder einer Ausführungsform davon) erfolgen. Dadurch kann überwachtes Finetuning und/oder unüberwachtes (Reinforcement) Learning basierend auf den Bewertungsergebnissen durchgeführt werden, mithin das Verfahren nach dem ersten allgemeinen Aspekt (oder einer Ausführungsform davon) verbessert werden. Dadurch können dann (zukünftig) noch besser Testfälle und/oder Testcode zum Testen der Software erzeugt werden.

### Kurzbeschreibung der Figuren

**Fig. 1a** illustriert schematisch beispielhafte Ausführungsformen eines computerimplementierten Verfahrens für die automatisierte Erzeugung von Testcode zum Testen einer Software.
**Fig. 1b** illustriert schematisch beispielhafte Ausführungsformen eines computerimplementierten Verfahrens für die automatisierte Erzeugung von Testcode zum Testen einer Software, wobei mindestens ein Testfall erzeugt wird.
**Fig. 1c** illustriert schematisch beispielhafte Ausführungsformen eines computerimplementierten Verfahrens für die automatisierte Erzeugung von Testcode zum Testen einer Software, wobei der Testcode erzeugt wird.
**Fig. 1d** illustriert schematisch beispielhafte Ausführungsformen eines computerimplementierten Verfahrens für die automatisierte Erzeugung von Testcode zum Testen einer Software, wobei zunächst mindestens ein Testfall und sodann der Testcode erzeugt werden.
**Fig. 2** illustriert schematisch beispielhafte Maschinenlernmodelle, die zumindest Code und Prompt auf mindestens einen Testfall und/oder den Testcode abbilden.
**Fig. 3a****-b** illustrieren schematisch das Bewerten des mindestens einen Testfall und/oder des Testcode.
**Fig. 4** illustriert schematisch das Testen der Software durch Ausführen des Testcode in einer Ausführungsumgebung.

### Detaillierte Beschreibung

Das in dieser Offenbarung vorgeschlagene Verfahren 100 ist auf die automatisierte Erzeugung von Testcode zum Test einer Software gerichtet. Die Software kann dafür ausgelegt sein, ein technisches System, insbesondere ein cyber-physisches System, insbesondere mindestens eine Recheneinheit eines Fahrzeugs, zu steuern, zu regeln und/oder zu überwachen. Insbesondere kann die Software eine embedded Software sein, die dafür ausgelegt ist, auf einem eingebetteten (d.h. z.B. aufgabenspezifischen) System ausgeführt werden.

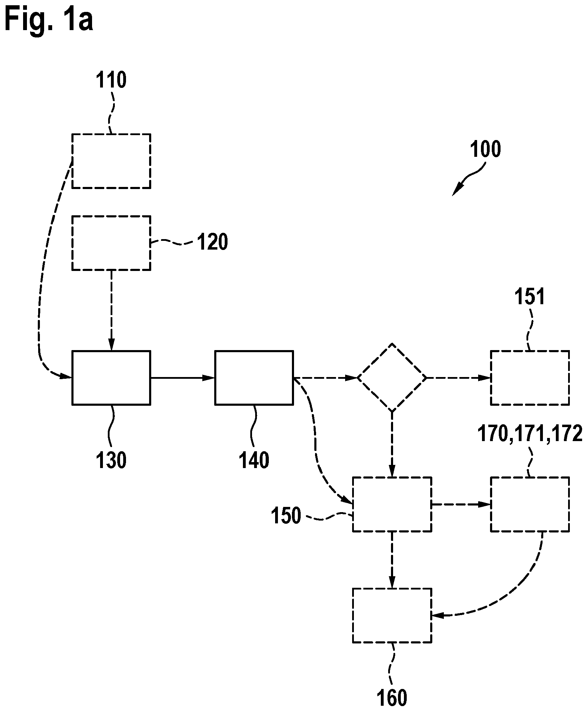

Offenbart wird dazu zunächst ein computer-implementiertes Verfahren 100, wie z.B. schematisch illustriert in **Fig. 1a****-d,** für die automatisierte Erzeugung von Testcode zum Testen einer Software. Das Verfahren 100 umfasst Erzeugen 130, via ein Maschinenlernmodell 30, mindestens eines Testfalls 40 und/oder eines Testcode 50 zumindest basierend auf einem Code 10 der Software und einem Prompt 20. Das Verfahren 100 umfasst weiterhin Bewerten 140 des mindestens einen Testfalls 40 und/oder des Testcode 50, wobei ein Bewertungsergebnis resultiert.

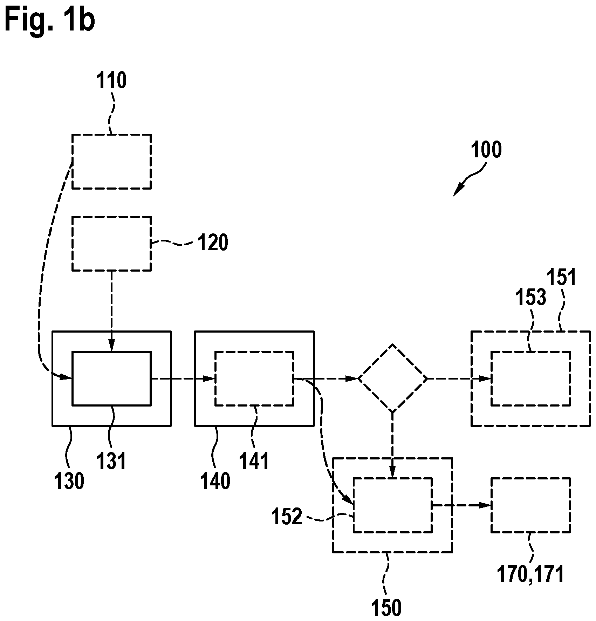

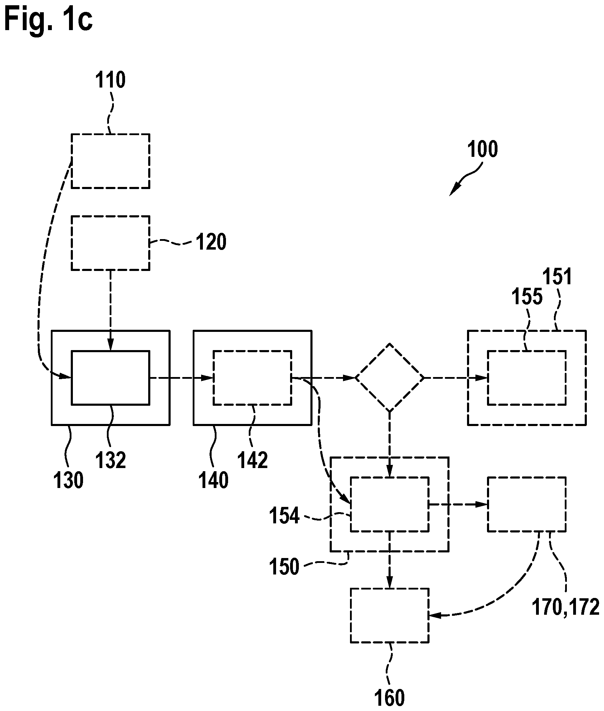

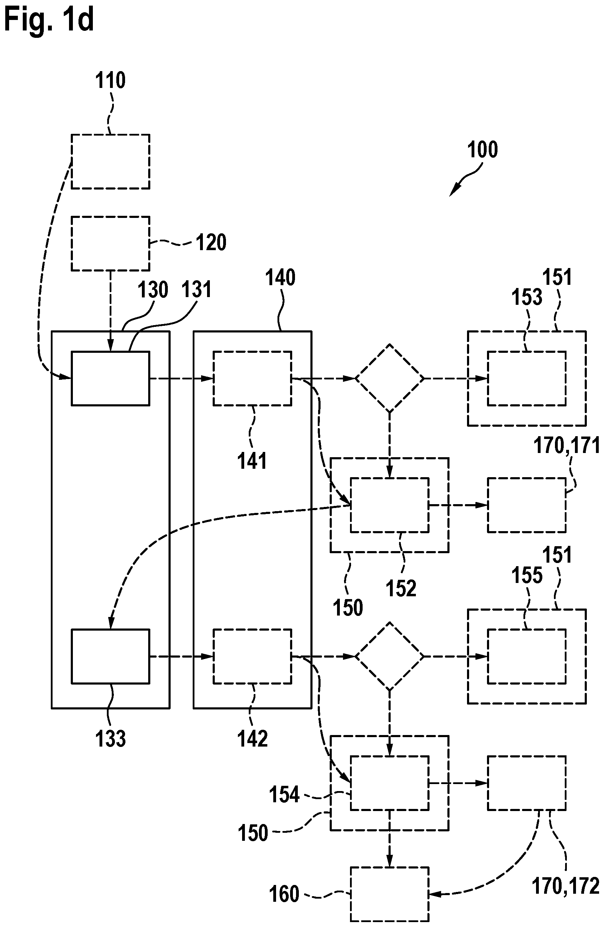

Das Verfahren 100, wie z.B. schematisch illustriert in **Fig. 1b****,** kann zum Beispiel Erzeugen 130, 131, via das Maschinenlernmodell 30, des mindestens einen Testfalls 40 (d.h. nicht notwendigerweise des Testcode) zumindest basierend auf dem Code 10 der Software und dem Prompt 20 sowie Bewerten 140, 141 des mindestens einen Testfalls 40, wobei ein Bewertungsergebnis resultiert, umfassen. In einem anderen Beispiel, wie z.B. schematisch illustriert in **Fig. 1c****,** kann das Verfahren 100 Erzeugen 130, 132, via das Maschinenlernmodell 30, des Testcode 50 (d.h. nicht notwendigerweise des mindestens einen Testfalls) zumindest basierend auf dem Code 10 der Software und dem Prompt 20 sowie Bewerten 140, 142 des Testcode 50, wobei ein Bewertungsergebnis resultiert, umfassen. Weiterhin kann das Verfahren 100 auch, wie z.B. schematisch illustriert in **Fig. 1d****,** Erzeugen 130, 131, 132, via das Maschinenlernmodell 30, des mindestens einen Testfalls 40 und des Testcode 50 zumindest basierend auf dem Code 10 der Software und dem Prompt 20 sowie Bewerten 140, 141, 142 des mindestens einen Testfalls 40 und/oder des Testcode 50, wobei ein Bewertungsergebnis resultiert, umfassen.

Der Code 10 der Software kann ein Quellcode der Software sein. Der Code 10 kann in einer oder mehreren Programmiersprachen geschrieben sein. Zum Beispiel kann der Code 10 in der Programmiersprache C geschrieben sein. Alternativ oder zusätzlich kann der Code 10 zum Beispiel in der Programmiersprache Rust geschrieben sein. Dank des hinreichend großen Sprachverständnisses des Maschinenlernmodells muss keine Festlegung bezüglich der Programmiersprache(n) erfolgen. In anderen Worten, das Verfahren 100 kann auf jeden Code unabhängig von der oder den Programmiersprachen angewandt werden.

Der mindestens eine Testfall 40 kann zum Beispiel einen natürlichsprachlichen Text umfassen oder ein solcher natürlichsprachlicher Text sein. Alternativ oder zusätzlich kann der mindestens eine Testfall eine Datenstruktur, die in einer vorbestimmten Syntax (z.B. in einer Programmiersprache) geschrieben ist, umfassen oder eine solche Datenstruktur sein. Die Datenstruktur kann zum Beispiel den natürlichsprachlichen Text umfassen. Der mindestens eine Testfall kann ein Szenario beschreiben, wie der Code (insbesondere bei dessen Ausführung) oder die Software getestet werden soll. Zum Beispiel kann der mindestens eine Testfall ein oder mehrere Eingangsgrößen definieren, auf denen der Code oder die Software ausgeführt werden soll. Der mindestens eine Testfall kann auch einen oder mehrere Referenzausgangsgrößen definieren, die bei Ausführung des Code oder der Software erwartet werden.

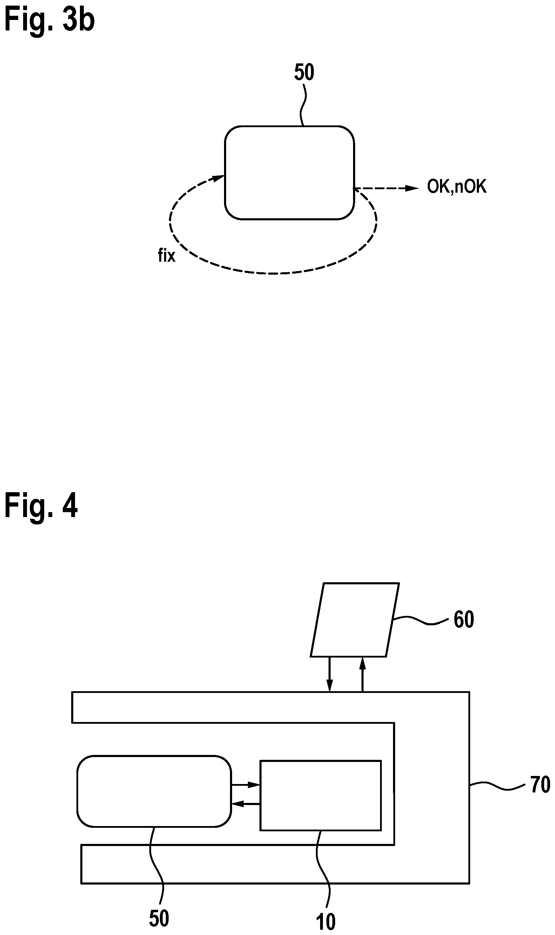

Der Testcode 50 kann ein ausführbarer Code sein. Dadurch kann die Software im Rahmen der Validierung und Verifizierung (V & V) automatisiert getestet werden. Der Testcode kann dafür ausgelegt sein, die Software im Hinblick auf (den) mindestens einen Testfall zu testen. Dazu kann der Testcode insbesondere dafür ausgelegt sein, in einer Ausführungsumgebung 70 (englisch: test harness) ausgeführt zu werden, so dass auch der Code 10 der Software zumindest teilweise (nämlich zumindest soweit der Testfall es verlangt) in der Ausführungsumgebung 70 ausgeführt, mithin getestet wird. Dies ist schematisch in **Fig.** 4 dargestellt.

Das Maschinenlernmodell 30 kann ein Foundation Model (auf Deutsch etwa: Basismodell) umfassen oder sein. Ein Foundation Model kann ein großes Maschinenlernmodell sein, das auf einer großen Datenmenge in großem Umfang trainiert wurde (oft durch selbstüberwachtes Lernen oder halbüberwachtes Lernen), so dass es an eine breite Palette nachgelagerter Aufgaben angepasst werden kann. Insbesondere kann das Maschinenlernmodell ein Large Language Model (LLM) umfassen oder sein. Ein Large Language Model kann ein Sprachmodell sein, das sich durch seine Größe auszeichnet. Insbesondere kann das Large Language Model ein Chatbot sein und/oder über Chatbot-Funktionalität verfügen. Als Large Language Model kann zum Beispiel Meta AI LLaMA verwendet werden. Ein solches Large Language Model kann vorteilhaft sein, da es und insbesondere dessen Gewichte und/oder Verzerrungen zum Beispiel durch das Verfahren 200 angepasst werden können. Alternativ oder zusätzlich kann zum Beispiel Google BERT verwendet werden. Alternativ oder zusätzlich kann als Large Language Model zum Beispiel OpenAl ChatGPT (z.B. in der Version vom 24.05.2023) verwendet werden. Alternativ oder zusätzlich kann als Large Language Model zum Beispiel Hugging Face Bloom verwendet werden.

Alternativ oder zusätzlich kann das Maschinenlernmodell ein Multi-Domain Model umfassen oder sein. Hier kann zum Beispiel OpenAI GPT-4 (z.B. in der Version vom 14.03.2023) verwendet werden.

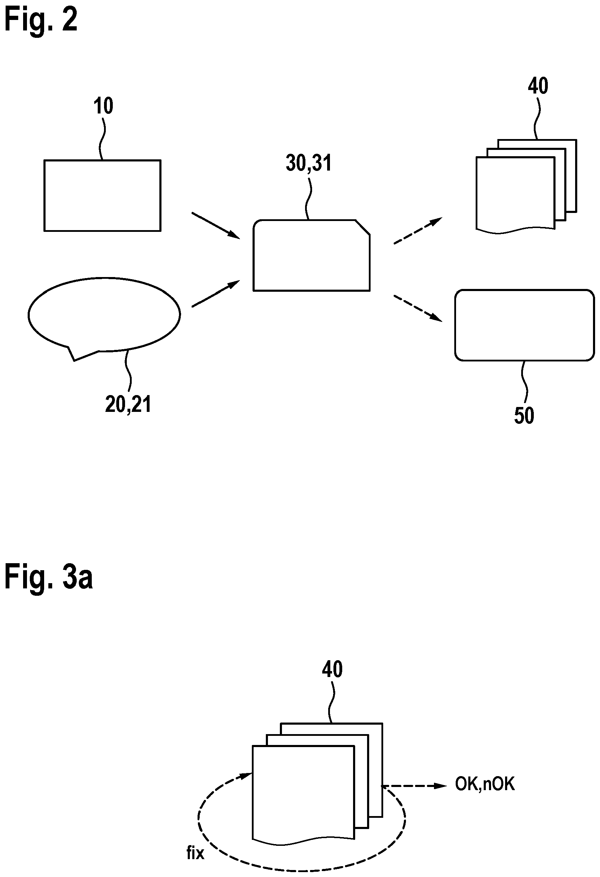

Beispielhafte Ausführungsformen des Maschinenlernmodells 30 sind in **Fig. 2** schematisch illustriert.

Der Prompt 20 kann ein natürlichsprachlicher Text sein. Der Prompt 20 kann eine natürlichsprachliche Anweisung an das Maschinenlernmodell 30 umfassen oder sein. Der Prompt kann zum Beispiel eine sprachliche Anweisung an das Large Language Model (LLM) umfassen, die darauf gerichtet ist, mindestens einen Testfall zum Testen des Code zu erzeugen. Alternativ oder zusätzlich kann der Prompt zum Beispiel eine sprachliche Anweisung an das Large Language Model (LLM) umfassen, die darauf gerichtet ist, mindestens einen Testcode zum Testen des Code zu erzeugen. Insbesondere kann der Prompt zum Beispiel eine sprachliche Anweisung an das Large Language Model (LLM) umfassen, die darauf gerichtet ist, mindestens einen Testfall und mindestens einen Testcode jeweils zum Testen des Code zu erzeugen.

Alternativ oder zusätzlich kann der Prompt eine sprachliche Anweisung an das Large Language Model (LLM) umfassen, die darauf gerichtet ist, wie ähnlich und/oder anders als der mindestens eine vorbestimmte Testfall der mindestens eine Testfall erzeugt werden soll. Alternativ oder zusätzlich kann der Prompt eine sprachliche Anweisung an das Large Language Model (LLM) umfassen, die darauf gerichtet ist, wie ähnlich und/oder anders als der mindestens eine vorbestimmte Testfall der mindestens eine Testcode erzeugt werden soll. Insbesondere kann der Prompt eine sprachliche Anweisung an das Large Language Model (LLM) umfassen, die darauf gerichtet ist, wie ähnlich und/oder anders als der mindestens eine vorbestimmte Testfall der mindestens eine Testfall und der mindestens eine Testcode erzeugt werden sollen.

Alternativ oder zusätzlich kann der Prompt eine sprachliche Anweisung an das Large Language Model (LLM) umfassen, die darauf gerichtet ist, wie ähnlich und/oder anders als mindestens ein in dem mindestens einen vorbestimmten Testcode kodierter Testfall der mindestens eine Testfall erzeugt werden soll. Alternativ oder zusätzlich kann der Prompt eine sprachliche Anweisung an das Large Language Model (LLM) umfassen, die darauf gerichtet ist, wie ähnlich und/oder anders als mindestens ein in dem mindestens einen vorbestimmten Testcode kodierter Testfall der mindestens eine Testcode erzeugt werden soll. Alternativ oder zusätzlich kann der Prompt eine sprachliche Anweisung an das Large Language Model (LLM) umfassen, die darauf gerichtet ist, wie ähnlich und/oder anders als mindestens ein in dem mindestens einen vorbestimmten Testcode kodierter Testfall der mindestens eine Testfall und der mindestens eine Testcode erzeugt werden sollen.

Das Verfahren 100 kann Erzeugen einer Vielzahl von Testfällen 40 (d.h. mindestens zweier Testfälle) umfassen. Ein oder mehrere Testfälle der Vielzahl der Testfälle können zum Beispiel zumindest basierend auf dem Code und dem Prompt erzeugt werden, d.h. in einer (einzigen) Ausführung des Verfahrens 100. Alternativ oder zusätzlich können ein oder mehrere Testfälle der Vielzahl der Testfällen durch Mehrfachausführungen des Verfahrens 100 erzeugt werden. Vorteilhafterweise kann in Mehrfachausführungen des Verfahrens 100 der Prompt variiert werden. Andererseits muss der Prompt nicht in Mehrfachausführungen des Verfahrens 100 variiert werden. Alternativ oder zusätzlich können ein oder mehrere Testfälle vorbestimmt sein. Alternativ oder zusätzlich kann in Mehrfachausführungen des Verfahrens 100 das Maschinenlernmodell variiert werden.

Das Verfahren 100 kann Erzeugen einer Vielzahl von Testcodes 50 (d.h. mindestens zweier Testcodes) umfassen. Alternativ oder zusätzlich kann das Verfahren 100 Erzeugen eines Testcodes umfassen, der dafür ausgelegt ist, die Software im Hinblick auf eine Vielzahl von Testcodes zu testen.

Das Verfahren 100 kann Empfangen 110 des Code 10 umfassen. Alternativ oder zusätzlich kann das Verfahren 100 Empfangen 120 des Prompt 20 und/oder des weiteren Prompts 21 umfassen, wobei die Reihenfolge der Schritte 110 und 120 unerheblich sein kann. Alternativ oder zusätzlich kann das Verfahren 100 Empfangen des Maschinenlernmodells 30 und/oder des weiteren Maschinenlernmodells 31 umfassen.

Das Bewertungsergebnis kann einen natürlichsprachlichen Text umfassen oder ein solcher natürlichsprachlicher Text sein. Alternativ oder zusätzlich kann das Bewertungsergebnis eine Datenstruktur, die in einer vorbestimmten Syntax (z.B. in einer Programmiersprache) geschrieben ist, umfassen oder eine solche Datenstruktur sein. Die Datenstruktur kann zum Beispiel den natürlichsprachlichen Text umfassen. Das Bewertungsergebnis kann einen oder mehrere numerische Werte, insbesondere einen oder mehrere Konfidenzwerte umfassen. Dadurch kann eine Güte des mindestens einen Testfalls und/oder des Testcode kodiert werden, die bei der Validierung und Verifikation (V & V) der Software berücksichtigt werden kann.

Sollte es mal nicht gelingen, einen Testfall und/oder einen Testcode zu erzeugen, kann das Bewertungsergebnis eine Information umfassen, dass die Erzeugung des mindestens einen Testfalls und/oder des Testcode fehlgeschlagen ist. Dies kann zum Beispiel dann passieren, wenn der Code bereits widersprüchlich ist. Auch diese Information ist wertvoll für die Entwicklung des technischen Systems. In diesem Fall kann und muss dann der Code angepasst und insbesondere verbessert werden.

Wie z.B. in **Fig. 3a****-b** schematisch dargestellt, kann der mindestens eine Testfall 40 und/oder der Testcode 50 bewertet werden, wobei zum Beispiel jeweils die Ergebnisse OK oder nOK (kurz für: nicht OK) vom Bewertungsergebnis umfasst sind. Im Falle eines nOK-Ergebnisses, kann der mindestens eine Testfall 40 und/oder der Testcode 50 repariert ("gefixt" oder "fix") werden, wobei ein in einer früheren Iteration des Verfahrens 100 erzeugte Testfall und/oder Testcode zum Beispiel in einer weiteren Iteration des Verfahrens 100 angepasst, verbessert und/oder korrigiert werden kann.

Das Verfahren 100 kann in einer elektronischen Programmierumgebung 60 ausgeführt werden. Die elektronische Programmierumgebung 60 kann, muss aber nicht die Ausführungsumgebung 70 sein. Die elektronische Programmierumgebung kann, wie z.B. in **Fig. 4** schematisch dargestellt, der Ausführungsumgebung übergeordnet sein. Zum Beispiel kann die Ausführungsumgebung durch die elektronische Programmierumgebung initialisiert und sodann gesteuert werden.

Weiterhin können zum Beispiel ein oder mehrere Ausführungsergebnisse von der Ausführungsumgebung an die elektronische Programmierumgebung zurückgegeben werden. Die elektronische Programmierumgebung ermöglicht die Programmierung und/oder Interaktion mit einer Vielzahl von Iterationen des Verfahrens 100. Insbesondere beim Initialisieren der Iterationen und/oder beim Debuggen während der Iterationen erweist sich die elektronische Programmierumgebung als vorteilhaft.

Durch entsprechende Anpassung des (weiteren) Prompts 20, 21 kann auch die Ausführungsumgebung für den Test der Software vom (weiteren) Maschinenlernmodell 30, 31 generiert werden. Allgemein können der Prompt 20 und/oder der weitere Prompt 21 zum Beispiel in der elektronischen Programmierumgebung angepasst werden.

Im Folgenden werden spezielle Faktoren offenbart, von denen das Erzeugen der Testfälle und/oder des Testcode abhängig sein kann.

Das Erzeugen 130 des mindestens einen Testfalls und/oder des Testcode kann zumindest auf einer natürlichsprachlichen Kommentierung im Code der Software basieren. Dies ist vorteilhaft, da insbesondere kritische Stellen im Code häufig (gut) kommentiert sind. Dadurch kann die Software besonders an diesen kritischen Stellen getestet werden.

Alternativ oder zusätzlich kann das Erzeugen 130, via das Maschinenlernmodell, des mindestens einen Testfalls und/oder des Testcode zumindest auf mindestens einem vorbestimmten Testfall (oder auf einer Vielzahl vorbestimmter Testfälle) basieren. Der mindestens eine vorbestimmte Testfall kann zum Beispiel als weiterer Input des Maschinenlernmodells beim Erzeugen 130 des mindestens einen Testfalls und/oder des Testcode berücksichtigt werden. Alternativ kann der mindestens eine vorbestimmte Testfall via den Prompt in das Erzeugen 130 des mindestens einen Testfalls und/oder des Testcode eingehen. Der mindestens eine vorbestimmte Testfall kann, muss aber nicht aus einer früheren Iteration des Verfahrens 100 resultieren. Je nach Prompt, können vorbestimmte Testfälle durch eine weitere Iteration des Verfahrens 100 erweitert, verbessert und/oder korrigiert werden.

Alternativ oder zusätzlich kann das Erzeugen 130, via das Maschinenlernmodell 30, des mindestens einen Testfalls und/oder des Testcode zumindest auf mindestens einem vorbestimmten Testcode (oder auf einer Vielzahl vorbestimmter Testcodes) basieren. Der mindestens eine vorbestimmte Testcode kann zum Beispiel als weiterer Input des Maschinenlernmodells beim Erzeugen 130 des mindestens einen Testfalls und/oder des Testcode berücksichtigt werden. Alternativ kann der mindestens eine vorbestimmte Testcode via den Prompt in das Erzeugen 130 des mindestens einen Testfalls und/oder des Testcode eingehen. Der mindestens eine vorbestimmte Testcode kann zum Beispiel in derselben Programmiersprache wie der Code geschrieben sein. Der mindestens eine vorbestimmte Testcode kann, muss aber nicht aus einer früheren Iteration des Verfahrens 100 resultieren. Je nach Prompt, können in einem vorbestimmten Testcode codierte Testfälle durch eine weitere Iteration des Verfahrens 100 erweitert, verbessert und/oder korrigiert werden.

Alternativ oder zusätzlich kann das Erzeugen 130, via das Maschinenlernmodell, des mindestens einen Testfalls und/oder des Testcode auf einer Metainformation des Code basieren. Die Metainformation kann insbesondere eine (natürlichsprachliche) Beschreibung des Code umfassen oder sein. Alternativ oder zusätzlich kann die Metainformation eine (natürlichsprachliche oder formelle) Spezifikation des Code, mithin der Software umfassen oder sein. Die Metainformation kann zum Beispiel als weiterer Input des Maschinenlernmodells beim Erzeugen 130 des mindestens einen Testfalls und/oder des Testcode berücksichtigt werden. Alternativ kann die Metainformation via den Prompt in das Erzeugen 130 des mindestens einen Testfalls und/oder des Testcode eingehen. Sowohl die Beschreibung des Code als auch die Spezifikation können zu erreichende Ziele der Software umfassen. Diese Informationen können sich als besonders nützlich erweisen, wenn es darum geht, die Funktionalität der Software eingehend zu testen. Weiterhin können sowohl die Beschreibung des Code als auch die Spezifikation Gültigkeitsgrenzen von Parametern umfassen, die es ermöglichen besonders aussagekräftige Grenztests zu definieren.

Das Verfahren 100 kann, wie z.B. durch das "OK" in **Fig. 3a****-b** schematisch illustriert, Beibehalten 150 des mindestens einen Testfalls und/oder des Testcode nach einem vorbestimmten Kriterium basierend auf dem Bewertungsergebnis umfassen. Das Verfahren 100 kann wie z.B. in **Fig. 1a****-d** schematisch illustriert (muss aber nicht) Verwerfen 151 des mindestens einen Testfalls und/oder des Testcode anderenfalls (d.h. wenn kein Beibehalten 150 erfolgt) umfassen.

Anstelle des Verwerfens kann der mindestens eine Testfall und/oder der Testcode zum Beispiel repariert werden, siehe z.B. **Fig. 3a****-b.**

Im Folgenden werden Ausführungsformen des Verfahrens 100 diskutiert, in denen der mindestens eine Testfall erzeugt wird 130, 131. Wie z.B. in **Fig. 1b** schematisch illustriert kann dies der Fall sein, wenn nur der mindestens ein Testfall erzeugt wird 131 und (zumindest in dieser Iteration des Verfahrens 100) kein Testcode erzeugt wird 132. D.h. der Testcode kann dann in einer weiteren Iteration des Verfahrens 100 erzeugt werden 130, 132. Andererseits kann dies auch dann der Fall sein, wenn, wie z.B. in **Fig. 1d** schematisch illustriert, sowohl der mindestens eine Testfall als auch der Testcode erzeugt werden 131, 132.

Der mindestens eine Testfall kann dann (muss aber nicht) bewertet werden 140, 141, wobei ein erstes Bewertungsergebnis resultiert. Andererseits kann es in Ausführungsformen wie in **Fig. 1d** schematisch illustriert, in denen zudem noch ein Testcode erzeugt wird 133, ausreichend sein, nur den erzeugten 133 Testcode zu bewerten 142. Zum Beispiel kann das Bewerten 140, 141 des mindestens einen Testfalls umfassen, zu prüfen, ob der mindestens eine Testfall bereits als ein vorbestimmter Testfall (z.B. in einer Vielzahl vorbestimmter Testfälle) bekannt ist. Das Bewertungsergebnis kann das erste Bewertungsergebnis umfassen oder sein.

Das Verfahren 100 kann Beibehalten 152 des mindestens einen Testfalls nach einem vorbestimmten Kriterium basierend auf dem ersten Bewertungsergebnis umfassen. Das Verfahren 100 kann wie z.B. in **Fig. 1b** und **Fig. 1d** schematisch illustriert (muss aber nicht) Verwerfen 153 des mindestens einen Testfalls anderenfalls (d.h. wenn kein Beibehalten 152 erfolgt) umfassen. Zum Beispiel kann der mindestens eine Testfall verworfen werden 153, wenn er bereits als ein vorbestimmter Testfall bekannt ist. In der Regel wird eine Vielzahl von Testfällen durch das Verfahren 100 (z.B. auch durch Mehrfachausführungen des Verfahrens) erzeugt 130, 131. Durch das Verwerfen 153 des mindestens einen Testfalls werden beibehaltene 152 Testfälle in der Vielzahl der Testfälle stärker gewichtet. Bei stets endlichem Testumfang (hier vor allem bei endlicher Testzeit) wird somit durch das Verwerfen 153 nichtaussagekräftiger Testfälle der Test der Software verbessert. Alternativ zum Verwerfen 153 kann der mindestens eine Testfall zum Beispiel erweitert, verbessert und/oder korrigiert werden.

Im Folgenden werden Ausführungsformen des Verfahrens 100 diskutiert, in denen der Testcode erzeugt wird 130, 132. Wie z.B. in **Fig. 1c** schematisch illustriert, kann dies der Fall sein, wenn nur der Testcode erzeugt wird 132 und (in dieser Iteration des Verfahrens 100) keine Testfälle erzeugt werden 131. Hier kann zum Beispiel der Testcode via das Maschinenlernmodell zumindest basierend auf dem Code der Software und dem Prompt erzeugt werden 130. In anderen Worten, hier kann zum Beispiel der Testcode ohne einen zuvor erzeugten mindestens einen Testfall erzeugt werden 130, 132. Hier kann zum Beispiel der mindestens eine Testfall ein Zwischenergebnis sein, das gar nicht vom Maschinenlernmodell ausgegeben wird.

Andererseits kann dies auch dann der Fall sein, wenn, wie z.B. in **Fig. 1d** schematisch illustriert, sowohl der mindestens eine Testfall (hier als Zwischenschritt, der auch ausgegeben werden kann) als auch der Testcode erzeugt werden 131, 132.

Das Verfahren kann nämlich Erzeugen 133, via ein weiteres Maschinenlernmodell 31, eines Testcode 50 zumindest basierend auf dem mindestens einen Testfall 40 und einem weiteren Prompt 21 umfassen, wobei der Testcode 50 dafür ausgelegt ist, die Software im Hinblick auf den mindestens einen Testfall 40 (oder die Vielzahl der Testfälle) zu testen. Dieses Vorgehen kann zum Beispiel vorteilhaft sein, da bereits der mindestens eine Testfall bewertet werden kann, bevor der Testcode erzeugt wird.

Das weitere Maschinenlernmodell 31 kann ein Foundation Model umfassen oder sein. Insbesondere kann das weitere Maschinenlernmodell ein Large Language Model (LLM) umfassen oder sein. Alternativ oder zusätzlich kann das weitere Maschinenlernmodell ein Multi-Domain Model umfassen oder sein. Wie z.B. in **Fig. 2** schematisch illustriert, kann das weitere Maschinenlernmodell 31, muss aber nicht das Maschinenlernmodell 30 sein.

Der weitere Prompt 21 kann ein natürlichsprachlicher Text sein. Der weitere Prompt 21 kann eine natürlichsprachliche Anweisung an das Maschinenlernmodell 31 umfassen oder sein. Der weitere Prompt kann eine sprachliche Anweisung an das Large Language Model (LLM) umfassen, die darauf gerichtet ist, einen oder mehrere Testcodes zum Testen des Code basierend auf dem mindestens einen Testfall zu erzeugen.

Der Testcode kann dann bewertet werden 140, 142, wobei ein zweites Bewertungsergebnis resultiert. Das Bewertungsergebnis kann das zweite Bewertungsergebnis umfassen oder sein. Zum Beispiel kann das Bewertungsergebnis das erste und das zweite Bewertungsergebnis umfassen.

Das Verfahren 100 kann Beibehalten 154 des Testcode nach einem vorbestimmten weiteren Kriterium basierend auf dem zweiten Bewertungsergebnis umfassen. Das Verfahren 100 kann wie z.B. in **Fig. 1c** und **Fig. 1d** schematisch illustriert (muss aber nicht) Verwerfen 155 des Testcode anderenfalls (d.h. wenn kein Beibehalten 154 erfolgt) umfassen. Zum Beispiel kann der Testcode verworfen werden 155, wenn er bereits als ein vorbestimmter Testcode bekannt ist. Es kann eine Vielzahl von Testcodes durch das Verfahren 100 (z.B. auch durch Mehrfachdurchführung des Verfahrens) erzeugt werden 130, 132. Durch das Verwerfen 155 des Testcode werden beibehaltene 154 Testcodes in der Vielzahl der Testcodes stärker gewichtet. Bei stets endlichem Testumfang (hier vor allem bei endlicher Testzeit) wird somit durch das Verwerfen 155 nichtaussagekräftiger Testcodes der Test der Software verbessert. Alternativ zum Verwerfen 155 kann der Testcode zum Beispiel erweitert, verbessert und/oder korrigiert werden.

Das Bewerten 140, 142 des Testcode 50 (und/oder das Verfahren 100) kann Ausführen des Testcode 50 umfassen, wobei ein Ausführungsergebnis, d.h. z.B. ein tatsächliches Ergebnis einer aufgerufenen Funktion resultiert. Dies kann, wie z.B. in **Fig. 4** schematisch dargestellt, in einer Ausführungsumgebung 70 erfolgen, wobei der Code, zumindest insoweit der mindestens eine Testfall und/oder der Testcode es verlangt, in der Ausführungsumgebung ausgeführt wird. Das Bewerten 140, 142 des Testcode 50 (und/oder das Verfahren 100) kann weiterhin Prüfen umfassen, ob das Ausführungsergebnis einem Referenzergebnis (z.B. umfassend einen oder mehrere Referenzausgangsgrößen) im Testcode entspricht. Das Bewerten 140, 142 des Testcode 50 (und/oder das Verfahren 100) kann weiterhin Korrigieren des mindestens einen Testfalls und/oder des Testcode, insbesondere des Referenzergebnisses, wenn das Ausführungsergebnis dem Referenzergebnis im Testcode nicht entspricht, umfassen. Anstelle einer Korrektur des mindestens einen Testfalls und/oder des Testcode oder falls mindestens eine Testfall und/oder der Testcode nicht korrigiert werden können, kann der mindestens eine Testfall und/oder der Testcode zum Beispiel verworfen 153, 155 werden, d.h. nicht beim Test der Software verwendet werden. Alternativ oder zusätzlich kann eine erneute Anwendung des Verfahrens 100 auf dem mindestens einen Testfall und/oder dem Testcode basieren und gegebenenfalls der Prompt angepasst werden.

Alternativ oder zusätzlich kann das Bewerten 140, 142 des Testcode (oder das Verfahren 100) Ausführen des Testcode 50 umfassen. Wiederum kann dies in der Ausführungsumgebung 70 erfolgen, wobei der Code, zumindest insoweit der mindestens eine Testfall und/oder der Testcode es verlangt, in der Ausführungsumgebung ausgeführt wird. Das Bewerten 140, 142 des Testcode (oder das Verfahren 100) kann Messen einer Codeabdeckung beim Ausführen des Code umfassen. Das Bewerten 140, 142 des Testcode (oder das Verfahren 100) kann Prüfen, ob die Codeabdeckung hinreichend groß ist, umfassen. Häufig wird die Codeabdeckung nicht nur für einen Testfall, sondern für eine Vielzahl von Testfällen gemessen. Je nach Fragestellung kann aber auch das Messen der Codeabdeckung für den mindestens einen Testfall oder für wenige Testfälle sinnvoll sein. Durch dieses Bewerten 140, 142 des Testcode kann implizit auch der oder die Testfälle im Testcode mitbewertet werden. Insoweit kann es entbehrlich sein, den mindestens einen Testfall zu bewerten 141.

Alternativ oder zusätzlich kann das Bewerten 140, 142 des Testcode (oder das Verfahren 100) eine dynamische Prüfung auf Redundanz des Testcode (oder der Vielzahl der Testcodes) umfassen. Häufig wird die dynamische Prüfung auf Redundanz für die Vielzahl der Testfälle gemessen. Je nach Fragestellung kann aber auch die dynamische Prüfung auf Redundanz für den mindestens einen Testfall oder für wenige Testfälle sinnvoll sein. Auch durch dieses Bewerten 140, 142 des Testcode kann implizit auch der oder die Testfälle im Testcode mitbewertet werden.

Alternativ oder zusätzlich kann das Bewerten 140, 142 des Testcode (oder das Verfahren 100) Messen einer Geeignetheit des Testcodes (oder der Vielzahl der Testcodes) umfassen. Dies kann auf Mutation Testing basieren. Beim Mutation Testing kann zum Beispiel der Code so mutiert werden, dass das (bisherige) Ausführungsergebnis verändert wird. Sodann kann beim Mutation Testing geprüft werden, ob der unveränderte Testcode, den geänderten Code detektiert. Dadurch kann der Testcode getestet werden. Zugleich kann dadurch die Geeignetheit des oder der Testfälle im Testcode gemessen werden. Die Geeignetheit kann angeben, ob der Testcode geeignet ist, um Fehler im Code zu finden.

Die jeweiligen Testergebnisse können im zweiten Bewertungsergebnis codiert werden.

Das Verfahren 100 kann Ausführen 160 des Testcode umfassen, wobei die Software im Hinblick auf (den) mindestens einen Testfall getestet wird. Das Ausführen 160 des Testcode kann in Abhängigkeit von dem Bewertungsergebnis, insbesondere in Abhängigkeit von dem zweiten Bewertungsergebnis erfolgen. Zum Beispiel kann das Ausführen 160 des Testcode davon abhängig gemacht werden, dass das Bewertungsergebnis und/oder das zweite Bewertungsergebnis als hinreichend gut ("OK") bewertet worden ist 140, 142. Hier kann nun der Code, mithin die Software getestet werden. Dadurch kann die Software, mithin das durch sie gesteuerte, geregelte und/oder überwachte technische System verbessert werden.

Das Verfahren 100 kann Ausgeben 170 des Bewertungsergebnisses umfassen. Dies kann zum Beispiel via die elektronische Programmierumgebung erfolgen. Das Ausgeben 170 des Bewertungsergebnisses kann Ausgeben des ersten Bewertungsergebnisses umfassen. Das erste Bewertungsergebnis kann zum Beispiel via die elektronische Programmierumgebung ausgegeben werden. Das erste Bewertungsergebnis kann ein oder mehrere Ergebnisse des Bewerten 140, 141 des mindestens einen Testfalls umfassen. Alternativ oder zusätzlich kann das Ausgeben 170 des Bewertungsergebnisses Ausgeben des zweiten Bewertungsergebnisses umfassen. Das zweite Bewertungsergebnis kann zum Beispiel via die elektronische Programmierumgebung ausgegeben werden. Das zweite Bewertungsergebnis kann ein oder mehrere Ergebnisse des Bewerten 140, 142 des Testcode umfassen. Insbesondere kann das zweite Bewertungsergebnis zum Beispiel eine gemessene Codeabdeckung beim Ausführen des Code der Software und gegebenenfalls eine Bewertung, ob diese hinreichend groß ist, umfassen. Alternativ oder zusätzlich kann das zweite Bewertungsergebnis zum Beispiel die gemessene Geeignetheit des Testcode (z.B. basierend auf Mutation Testing) umfassen.

Insbesondere können sowohl das erste als auch das zweite Bewertungsergebnis z.B. via die elektronische Programmierumgebung ausgegeben werden. Dies ist vorteilhaft, da anhand des Bewertungsergebnisses der Ablauf des Verfahrens 100 angepasst werden kann. So können zum Beispiel Testfälle und/oder Testcode(s) aufgrund der ersten Bewertungsergebnisse manuell ausgewählt oder aussortiert werden.

Alternativ oder zusätzlich kann das Verfahren 100 Ausgeben 171 des mindestens einen Testfalls (oder der Vielzahl der Testfälle) umfassen. Dies kann via die elektronische Programmierumgebung erfolgen.

Alternativ oder zusätzlich kann das Verfahren 100 Ausgeben 172 des Testcode umfassen. Dies kann ebenfalls via die elektronische Programmierumgebung erfolgen.

Das Verfahren 100 kann auf mindestens einer Eingabe eines Benutzers einer Schnittstelle der elektronischen Programmierumgebung basieren. Zum Beispiel kann das Verfahren 100 und/oder dessen Mehrfachausführungen über die elektronische Programmierumgebung (interaktiv) gesteuert werden. Dies kann zum Beispiel hilfreich sein, beim Einrichten der Programmierumgebung und/oder der Ausführungsumgebung, bevor das Verfahren 100 automatisiert durchlaufen lassen wird. Alternativ oder zusätzlich kann die interaktive Steuerung beim Debuggen des automatisierten Durchlaufs des Verfahrens 100 hilfreich sein.

Alternativ oder zusätzlich können zum Beispiel eine oder mehrere Referenzausgangsgrößen über eine Eingabe ergänzt und/oder korrigiert werden.

Alternativ oder zusätzlich kann zum Beispiel via eine Eingabe nach der Testfallgenerierung eine interaktive Auswahl der gewünschten Testfälle erfolgen, bevor mit der Testcodegenerierung fortgefahren wird.

Das Verfahren 100 kann wiederholt werden. Dabei können das Maschinenlernmodell und/oder der Prompt sowie gegebenenfalls weitere Inputs variiert werden. Bei Bedarf, wenn z.B. die Codeabdeckung zu gering ist und/oder zu wenig effektive Testfälle oder generell noch zu wenige Testfälle erzeugt worden sind, können in mindestens einer weiteren Iteration zusätzliche Testfälle erzeugt werden, insbesondere um die Abdeckung zu erhöhen. Dabei können z.B. die bisherigen Testfälle als zusätzliche Eingabe genutzt werden.

Unterschiedliche Testfälle bzw. Testcode können sowohl durch Einfach- als auch durch Mehrfachausführungen des Verfahrens 100 erzeugt werden. Bereits in einer Einfachausführung des Verfahrens 100 besteht eine Varianz durch die inhärente Variabilität des Maschinenlernmodells (temperature). Soll es auf Basis eines Prompts zum Beispiel 101 unterschiedliche Testfälle generieren, können dank der inhärenten Variabilität tatsächlich 101 unterschiedliche Testfälle generiert werden. Weiterhin besteht Varianz in Mehrfachausführungen des Verfahrens 100 durch die mögliche Vielfalt an Prompts. Alternativ oder zusätzlich besteht Varianz durch unterschiedliche Kombinationen verschiedener Eingabeartefakte (z.B. nur Signatur, mit Implementierung, mit Anforderungen der Spezifikation, etc.). Werden (zum Beispiel durch unabhängige Mehrfachausführungen) doch statisch feststellbare mehrfach vorkommende Testfälle erzeugt, können sie aussortiert werden. Selbst wenn sie nicht aussortiert werden, beeinträchtigen sie nur die Effizienz des Tests der Software, nicht aber die Qualität des Tests der Software selbst.

Offenbart wird weiterhin ein computer-implementiertes Verfahren 200 zum weiteren Trainieren eines Maschinenlernmodells 30 und/oder eines weiteren Maschinenlernmodells 31, wobei das Maschinenlernmodell 30 dafür ausgelegt ist, mindestens einen Testfall 40 und/oder einen Testcode 50 jeweils zum Testen einer Software zumindest basierend auf einem Code 10 der Software und einem Prompt 20 zu erzeugen 130, und gegebenenfalls das weitere Maschinenlernmodell 31 dafür ausgelegt ist, einen Testcode 50 zum Testen der Software zumindest basierend auf mindestens einen Testfall 40 und einem weiteren Prompt 21 zu erzeugen 133. Das Verfahren 200 umfasst Anpassen des Maschinenlernmodells 30 und/oder weiteren Maschinenlernmodells 31 zumindest basierend auf mindestens einem Testfall 40 und/oder des Testcode 50 sowie auf mindestens einem Bewertungsergebnis, wobei das mindestens eine Bewertungsergebnis durch Bewerten 140 des mindestens einen Testfalls 40 und/oder des Testcode 50 resultiert.

Insbesondere wird ein computer-implementiertes Verfahren 200 zum weiteren Trainieren eines Maschinenlernmodells 30 offenbart, wobei das Maschinenlernmodell 30 dafür ausgelegt ist, mindestens einen Testfall 40 und/oder einen Testcode 50 jeweils zum Testen einer Software zumindest basierend auf einem Code 10 der Software und einem Prompt 20 zu erzeugen 130. Das Verfahren 200 umfasst Anpassen des Maschinenlernmodells 30 zumindest basierend auf mindestens einem Testfall 40 und/oder des Testcode 50 sowie auf mindestens einem Bewertungsergebnis, insbesondere auf mindestens einem ersten und/oder zweiten Bewertungsergebnis, wobei das mindestens eine Bewertungsergebnis, insbesondere das mindestens eine erste und/oder zweite Bewertungsergebnis durch Bewerten 140 des mindestens einen Testfalls 40 und/oder des Testcode 50 resultiert.

Alternativ oder zusätzlich wird ein computer-implementiertes Verfahren 200 zum weiteren Trainieren eines weiteren Maschinenlernmodells 31 offenbart, wobei das weitere Maschinenlernmodell 31 dafür ausgelegt ist, einen Testcode 50 zum Testen der Software zumindest basierend auf mindestens einen Testfall 40 und einem weiteren Prompt 21 zu erzeugen 133. Das Verfahren 200 umfasst Anpassen des weiteren Maschinenlernmodells 31 zumindest basierend auf mindestens einem Testfall 40 und/oder des Testcode 50 sowie auf mindestens einem Bewertungsergebnis, insbesondere auf mindestens einem ersten und/oder zweiten Bewertungsergebnis, wobei das mindestens eine Bewertungsergebnis, insbesondere das mindestens eine erste und/oder zweite Bewertungsergebnis durch Bewerten 140 des mindestens einen Testfalls 40 und/oder des Testcode 50 resultiert.

Alternativ oder zusätzlich wird ein computer-implementiertes Verfahren 200 zum weiteren Trainieren eines Maschinenlernmodells 30 und eines weiteren Maschinenlernmodells 31 offenbart, wobei das Maschinenlernmodell 30 dafür ausgelegt ist, mindestens einen Testfall 40 und/oder einen Testcode 50 jeweils zum Testen einer Software zumindest basierend auf einem Code 10 der Software und einem Prompt 20 zu erzeugen 130, und das weitere Maschinenlernmodell 31 dafür ausgelegt ist, einen Testcode 50 zum Testen der Software zumindest basierend auf mindestens einen Testfall 40 und einem weiteren Prompt 21 zu erzeugen 133. Das Verfahren 200 umfasst Anpassen des Maschinenlernmodells 30 und/oder weiteren Maschinenlernmodells 31 zumindest basierend auf mindestens einem Testfall 40 und/oder des Testcode 50 sowie auf mindestens einem Bewertungsergebnis, insbesondere auf mindestens einem ersten und/oder zweiten Bewertungsergebnis, wobei das mindestens eine Bewertungsergebnis, insbesondere das mindestens eine erste und/oder zweite Bewertungsergebnis durch Bewerten 140 des mindestens einen Testfalls 40 und/oder des Testcode 50 resultiert.

Das Bewerten 140 kann, muss aber nicht Teil des Verfahrens 200 sein. Der mindestens eine Testfall 40 und/oder der Testcode 50 können nach dem Verfahren 100 für die automatisierte Erzeugung von Testcode zum Testen einer Software erzeugt 130 und bewertet 140 worden sein. Das Verfahren 200 kann, muss aber nicht eine Fortsetzung des Verfahrens 100 sein.

Alternativ oder zusätzlich kann das Verfahren 100 via ein angepasstes Maschinenlernmodell und/oder ein angepasstes weiteres Maschinenlernmodell erneut ausgeführt werden. Insbesondere kann das Maschinenlernmodell 30 und/oder das weitere Maschinenlernmodell 31 zwischen Mehrfachausführungen des Verfahrens 100 nach dem Verfahren 200 angepasst werden.

Das Anpassen des Maschinenlernmodells 30 kann zumindest auf mindestens einen zu testenden Code 10 sowie mindestens auf einem Prompt 20 basieren. Alternativ oder zusätzlich kann das Anpassen des weiteren Maschinenlernmodells 31 auf mindestens einem Testfall 40 und einem weiteren Prompt 21 basieren.

Das Maschinenlernmodell 30 und/oder das weitere Maschinenlernmodell 31 können durch überwachtes Learning angepasst werden. Eine solche Anpassung des Maschinenlernmodells 30 und/oder des weiteren Maschinenlernmodells 31 kann als überwachtes Finetuning gesehen werden. Dank des Finetuning kann ein generisches Maschinenlernmodell, das zum Beispiel auf ein allgemeines Maschinensprachverständnis trainiert worden ist, anwendungsspezifisch, d.h. hier im Hinblick auf das Erzeugen von Testfällen und/oder Testcode zum Testen der Software angepasst werden.

Das Finetuning des Maschinenlernmodells 30 und/oder des weiteren Maschinenlernmodells 31 kann, muss aber nicht einer weiteren Anpassung des Maschinenlernmodells 30 und/oder des weiteren Maschinenlernmodells 31 durch unüberwachtes (Reinforcement) Learning vorausgehen.

Alternativ oder zusätzlich kann das Anpassen des Maschinenlernmodells 30 und/oder weiteren Maschinenlernmodells 31 zumindest basierend auf mindestens einem Testfall 40 und/oder des Testcode 50 sowie auf mindestens einem Bewertungsergebnis Berechnen mindestens einer Belohnung (englisch: reward) zumindest basierend auf dem mindestens einen Bewertungsergebnis und Anpassen des Maschinenlernmodells 30 und/oder weiteren Maschinenlernmodells 31 zumindest basierend auf dem mindestens einen Testfall 40 und/oder des Testcode 50 sowie auf der mindestens einen Belohnung umfassen. Eine solche Anpassung des Maschinenlernmodells 30 und/oder des weiteren Maschinenlernmodells 31 kann als unüberwachtes (Reinforcement) Learning gesehen werden. Dadurch kann ein generisches Maschinenlernmodell, das zum Beispiel auf ein allgemeines Maschinensprachverständnis trainiert worden ist, und/oder ein solches Modell nach Finetuning, anwendungsspezifisch, d.h. hier im Hinblick auf das Erzeugen von Testfällen und/oder Testcode zum Testen der Software (weiter) angepasst werden. Dadurch kann das Maschinenlernmodell 30 und/oder das weitere Maschinenlernmodell 31 noch besser an den Anwendungsfall Erzeugung von Testfällen und/oder Testcode angepasst werden.

Eine Belohnung kann ein Parameter, insbesondere ein numerischer Parameter sein, der vergleichbar zu anderen Parametern ist, die ebenfalls Belohnungen sind. Eine Belohnung kann zum Beispiel größer, gleich oder kleiner als eine andere Belohnung sein.

Die mindestens eine Belohnung kann größer sein, wenn das mindestens eine Bewertungsergebnis besser ist, und die mindestens eine Belohnung kann niedriger sein, wenn das mindestens eine Bewertungsergebnis schlechter ist.

Ein Bewertungsergebnis kann schlechter, insbesondere schlecht sein, wenn bereits eine Prüfung, auf der das Bewertungsergebnis basiert, negativ ausgefallen ist, d.h. z.B. nicht bestanden wurde. Alternativ oder zusätzlich kann ein Bewertungsergebnis besser, insbesondere gut sein, wenn alle Prüfungen, positiv ausgefallen, d.h. z.B. bestanden wurden.

Das Maschinenlernmodell 30 und/oder das weitere Maschinenlernmodell 31 können zumindest basierend auf einer Vielzahl von Testfällen 40 und/oder Testcode 50 und einer Vielzahl dazugehöriger Belohnungen angepasst werden. Das Verfahren kann hier Berechnen der Belohnungen zumindest basierend auf einer Vielzahl von Bewertungsergebnissen je Testfall 40 und/oder Testcode 50 der Vielzahl der Testfälle 40 und/oder Testcode 50 umfassen. In anderen Worten, die Belohnung für einen Testfall oder Testcode braucht nicht nur von dessen Bewertungsergebnis abzuhängen, sondern kann auch auf einem oder mehreren Bewertungsergebnisse zu anderen Testfällen und/oder anderen Testcodes basieren. Eine oder mehrere Belohnungen (d.h. die Höhe derselben) kann zum Beispiel von einer Anzahl der Bewertungsergebnisse abhängen. Alternativ oder zusätzlich können eine oder mehrere Belohnungen von einer Anzahl von besseren Bewertungsergebnissen und von einer Anzahl von schlechteren Bewertungsergebnissen, insbesondere von einem Ungleichgewicht zwischen besseren und schlechteren Bewertungsergebnissen abhängen. Alternativ oder zusätzlich, können zunächst Belohnungen je Bewertungsergebnis berechnet werden und dann basierend auf anderen Bewertungsergebnissen angepasst und/oder verrechnet werden.

Das Anpassen des Maschinenlernmodells 30 und/oder weiteren Maschinenlernmodells 31 kann auf einem Reinforcement Learning Algorithmus wie zum Beispiel Proximal Policy Optimization (PPO) basieren.

Ein Teil des Maschinenlernmodells 30 und/oder ein Teil des weiteren Maschinenlernmodells 31 kann (gewollt) nicht angepasst werden, d.h. fixiert werden. Hier wird dann nur ein anderer Teil des Maschinenlernmodells 30 und/oder ein Teil des weiteren Maschinenlernmodells 31 angepasst.

Zum Beispiel können bestimmte Parameter wie z.B. Gewichte und/oder Verzerrungen, insbesondere Gewichte und/oder Verzerrungen auf früheren Schichten des Maschinenlernmodells 30 und/oder des weiteren Maschinenlernmodells 31 nicht angepasst, d.h. fixiert werden. Zum Beispiel können die Anpassungen auf hintere Schichten des Maschinenlernmodells 30 und/oder des weiteren Maschinenlernmodells 31 beschränkt werden, in denen Testfälle und/oder Testcode erzeugt werden. Dadurch kann sichergestellt werden, dass das Maschinenlernmodell 30 und/oder das weitere Maschinenlernmodell 31 sich nicht im Hinblick auf das Maschinensprachverständnis über Gebühr verschlechtert. Andererseits kann eine Verschlechterung des Maschinensprachverständnis insoweit durch das Anpassen angestrebt werden, als es keine Rolle für das Erzeugen von Testfällen und/oder Testcode zum Testen der Software spielt. Zum Beispiel ist (üblicherweise) das Maschinensprachverständnis von Shakespeare-Englisch nicht für das Erzeugen von Testfällen und/oder Testcode erforderlich.

Das Verfahren 200 kann über die elektronische Programmierumgebung 60 gesteuert werden. Insbesondere können das Maschinenlernmodell 30 und/oder das weitere Maschinenlernmodells 31 via die elektronische Programmierumgebung weiter angepasst werden.

Offenbart wird weiterhin ein Computer-System, das dafür ausgelegt ist, das computer-implementierte Verfahren 100 für die automatisierte Erzeugung von Testcode zum Testen einer Software auszuführen. Alternativ oder zusätzlich kann das Computer-System dafür ausgelegt sein, das computer-implementierte Verfahren 200 zum weiteren Trainieren eines Maschinenlernmodells 30 und/oder weiteren Maschinenlernmodells 31 auszuführen. Insbesondere kann das Computer-System dafür ausgelegt sein, das computer-implementierte Verfahren 100 für die automatisierte Erzeugung von Testcode zum Testen einer Software und (z.B. im Anschluss) das computer-implementierte Verfahren 200 zum weiteren Trainieren eines Maschinenlernmodells 30 und/oder weiteren Maschinenlernmodells 31 auszuführen. Das Computer-System kann einen Prozessor und/oder einen Arbeitsspeicher umfassen.

Offenbart wird weiterhin ein Computer-Programm, das dafür ausgelegt ist, das computer-implementierte Verfahren 100 für die automatisierte Erzeugung von Testcode zum Testen einer Software auszuführen. Alternativ oder zusätzlich kann das Computer-Programm dafür ausgelegt sein, das computer-implementierte Verfahren 200 zum weiteren Trainieren eines Maschinenlernmodells 30 und/oder weiteren Maschinenlernmodells 31 auszuführen. Insbesondere kann das Computer-Programm dafür ausgelegt sein, das computer-implementierte Verfahren 100 für die automatisierte Erzeugung von Testcode zum Testen einer Software und (z.B. im Anschluss) das computer-implementierte Verfahren 200 zum weiteren Trainieren eines Maschinenlernmodells 30 und/oder weiteren Maschinenlernmodells 31 auszuführen. Das Computer-Programm kann z.B. in interpretierbarer oder in kompilierter Form vorliegen. Es kann (auch in Teilen) zur Ausführung z.B. als Bit- oder Byte-Folge in den RAM eines Computers geladen werden.

Offenbart wird weiterhin ein computer-lesbares Medium oder Signal, das das Computer-Programm speichert und/oder enthält. Das Medium kann z.B. eines von RAM, ROM, EPROM, HDD, SSD, ... umfassen, auf/in dem das Signal gespeichert wird.

## Patentansprüche

1. Computer-implementiertes Verfahren (100) für die automatisierte Erzeugung von Testcode zum Testen einer Software, umfassend:
- Erzeugen (130), via ein Maschinenlernmodell (30), mindestens eines Testfalls (40) und/oder eines Testcode (50) zumindest basierend auf einem Code (10) der Software und einem Prompt (20);
- Bewerten (140) des mindestens einen Testfalls (40) und/oder des Testcode (50), wobei ein Bewertungsergebnis resultiert.

2. Verfahren (100) nach Anspruch 1, wobei die Software dafür ausgelegt ist, ein technisches System, insbesondere ein cyber-physisches System, insbesondere mindestens eine Recheneinheit eines Fahrzeugs, zu steuern, zu regeln und/oder zu überwachen.

3. Verfahren (100) nach Anspruch 1 oder 2, wobei das Verfahren (100) in einer elektronischen Programmierumgebung (60) ausgeführt wird.

4. Verfahren (100) nach einem der vorhergehenden Ansprüche, umfassend:
- Beibehalten (150) des mindestens einen Testfalls und/oder des Testcode nach einem vorbestimmten Kriterium basierend auf dem Bewertungsergebnis;
- optional, Verwerfen (151) des mindestens einen Testfalls und/oder des Testcode anderenfalls.

5. Verfahren (100) nach einem der vorhergehenden Ansprüche, umfassend:
- Erzeugen (133), via ein weiteres Maschinenlernmodell (31), eines Testcode (50) zumindest basierend auf dem mindestens einen Testfall (40) und einem weiteren Prompt (21), wobei der Testcode (50) dafür ausgelegt ist, die Software im Hinblick auf den mindestens einen Testfall (40) zu testen.

6. Verfahren (100) nach einem der vorhergehenden Ansprüche, wobei das Bewerten (140, 142) des Testcode (50) umfasst:
- Ausführen des Testcode (50), optional in einer Ausführungsumgebung (70), wobei der Code, zumindest insoweit der mindestens eine Testfall und/oder der Testcode es verlangt, in der Ausführungsumgebung ausgeführt wird, wobei ein Ausführungsergebnis resultiert;
- Prüfen, ob das Ausführungsergebnis einem Referenzergebnis im Testcode entspricht;
- optional, Korrigieren des mindestens einen Testfalls und/oder des Testcode, insbesondere des Referenzergebnisses, wenn das Ausführungsergebnis dem Referenzergebnis im Testcode nicht entspricht.

7. Verfahren (100) nach einem der vorhergehenden Ansprüche, wobei das Bewerten (140, 142) des Testcode umfasst:
- Ausführen des Testcode (50), optional in einer Ausführungsumgebung (70), wobei der Code, zumindest insoweit der mindestens eine Testfall und/oder der Testcode es verlangt, in der Ausführungsumgebung ausgeführt wird;
- Messen einer Codeabdeckung beim Ausführen des Code;
- Prüfen, ob die Codeabdeckung hinreichend groß ist.

8. Verfahren (100) nach einem der vorhergehenden Ansprüche, wobei das Bewerten (140, 142) des Testcode eine dynamische Prüfung auf Redundanz des Testcode umfasst.

9. Verfahren (100) nach einem der vorhergehenden Ansprüche, wobei das Bewerten (140, 142) des Testcode umfasst:
- Messen einer Geeignetheit des Testcodes, insbesondere basierend auf Mutation Testing.

10. Verfahren (100) nach einem der vorhergehenden Ansprüche, umfassend:
- Ausführen (160) des Testcode, optional in Abhängigkeit von dem Bewertungsergebnis, wobei die Software getestet wird.

11. Computer-implementiertes Verfahren (200) zum weiteren Trainieren eines Maschinenlernmodells (30) und/oder weiteren Maschinenlernmodells (31), wobei das Maschinenlernmodell (30) dafür ausgelegt ist, mindestens einen Testfall (40) und/oder einen Testcode (50) zum Testen einer Software zumindest basierend auf einem Code (10) der Software und einem Prompt (20) zu erzeugen (130), und;
das weitere Maschinenlernmodell (31) dafür ausgelegt ist, einen Testcode (50) zum Testen der Software zumindest basierend auf mindestens einen Testfall (40) und einem weiteren Prompt (21) zu erzeugen (133); das Verfahren (200) umfassend:
- Anpassen des Maschinenlernmodells (30) und/oder weiteren Maschinenlernmodells (31) zumindest basierend auf mindestens einem Testfall (40) und/oder des Testcode (50) sowie auf mindestens einem Bewertungsergebnis, wobei das mindestens eine Bewertungsergebnis durch Bewerten (140) des mindestens einen Testfalls (40) und/oder des Testcode (50) resultiert;
wobei der mindestens eine Testfall (40) und/oder der Testcode (50) nach dem Verfahren (100) für die automatisierte Erzeugung von Testcode zum Testen der Software nach einem der vorhergehenden Ansprüche erzeugt (130, 131, 132, 133) und bewertet (140, 141, 142) wurde.

12. Verfahren (200) nach Anspruch 11, wobei das Anpassen des Maschinenlernmodells (30) und/oder weiteren Maschinenlernmodells (31) zumindest basierend auf mindestens einem Testfall (40) und/oder des Testcode (50) sowie auf mindestens einem Bewertungsergebnis umfasst:
- Berechnen mindestens einer Belohnung zumindest basierend auf dem mindestens einen Bewertungsergebnis;
- Anpassen des Maschinenlernmodells (30) und/oder weiteren Maschinenlernmodells (31) zumindest basierend auf dem mindestens einen Testfall (40) und/oder des Testcode (50) sowie auf der mindestens einen Belohnung.

13. Computer-System, dafür ausgelegt,
das computer-implementierte Verfahren (100) für die automatisierte Erzeugung von Testcode zum Testen einer Software nach einem der Ansprüche 1 bis 10, und/oder
das computer-implementierte Verfahren (200) zum weiteren Trainieren eines Maschinenlernmodells (30) und/oder weiteren Maschinenlernmodells (31) nach Anspruch 11 oder 12 auszuführen.

14. Computer-Programm, dafür ausgelegt,
das computer-implementierte Verfahren (100) für die automatisierte Erzeugung von Testcode zum Testen einer Software nach einem der Ansprüche 1 bis 10 und/oder
das computer-implementierte Verfahren (200) zum weiteren Trainieren eines Maschinenlernmodells (30) und/oder weiteren Maschinenlernmodells (31) nach Anspruch 11 oder 12 auszuführen.

15. Computer-lesbares Medium oder Signal, das das Computer-Programm nach Anspruch 14 speichert und/oder enthält.
